# EUROPÄISCHE PATENTSCHRIFT

(11) **EP 0 527 542 B1**
(45) Veröffentlichungstag und Bekanntmachung des Hinweises auf die Patenterteilung: **18.12.1996**
(21) Anmeldenummer: 92250208.3
(22) Anmeldetag: 10.08.1992
(51) Int. Cl.: B65G 47/68, B65G 47/70, B65G 47/31, B65G 43/08

(54) **Fördersystem mit mehrfachen Zufuhrbahnen**
Conveyor system with multiple feed lines
Système de convoyeurs alimenté par plusieurs couloirs

(30) Priorität: 09.08.1991 US 743506
(43) Veröffentlichungstag der Anmeldung: 17.02.1993
(73) Patentinhaber: MANNESMANN Aktiengesellschaft, 40027 Düsseldorf (DE)
(72) Erfinder: Doane, R. Martin, Ada, Michigan 49301 (US)
(74) Vertreter: Meissner, Peter E., Dipl.-Ing.

(56) Entgegenhaltungen:
- EP-A- 0 383 615
- GB-A- 2 182 299

## Beschreibung

Die Erfindung betrifft ein Fördersysteme gemäß dem Oberbegriff des Anspruchs 1.

In einem Lager, wie beispielsweise einem Umschlaglager, werden von verschiedenen Quellen kommende Pakete von Lastwagen oder Bahnwaggons entladen und umorganisiert, z.B entsprechend Produktgruppierungen zur Lagerung von gleichen Produkten in gemeinsamen Bereichen eines Lagers oder entsprechend einem bestimmten endgültigen Zielort zur Beladung auf einen Hänger o.ä. Ein Fördersystem zur Erledigung dieser Aktivitäten umfaßt normalerweise viele Beschickungsbahnen, die zusammenlaufen und die Pakete zu einer einzigen Reihe von Produkten vereinen. Die Reihe von Produkten wird dann von einem Sortiersystem Paket für Paket auf eine Sortierübergabebahn sortiert.

Um Pakete auf dem Sortiersystem sortieren zu können, ist es notwendig, daß die Pakete durch eine Lücke von ausreichender Länge getrennt sind, damit ein mechanischer Sortiermechanismus einzelne Pakete durch seitliches Verschieben des sich bewegenden Pakets am gewünschten Ort vom Sortierband entfernen kann, wenn das Paket durch die betreffende Übergabebahn läuft. Während ein geeigneter Abstand bzw. eine Lücke zwischen den Paketen notwendig ist, verringert andererseits ein Abstand, der größer ist als der für das Sortiersystem benötigte) die Aufnahmefähigkeit des Fördersystems von Paketen.

Eine Technik zur Erzielung von Lücken zwischen den Paketen ist es, den Fluß von Paketen von einem Sammelförderer auf eine Reihe von Bändern mit zunehmender Geschwindigkeit zu führen. Wenn das Paket von einem Band zum nächsten verbracht wird, wird es beschleunigt und vom folgenden Paket räumlich getrennt. Die Schwierigkeit eines solchen System ist es, daß die Lücke proportional zur Länge des Pakets ist. Das Ergebnis ist, daß bei sorgfältiger Auswahl der Lücke für die kleinsten Pakete verschwenderisch große Lücken zwischen längeren Paketen auftreten.

Eine weitere Schwierigkeit, die bei einem derartigen System anzutreffen ist, ist das Vereinen der Pakete in eine einzige Reihe zwecks Sortierung. Da Lagerfläche üblicherweise teuer ist, ist es nachteilig, einen Sammelförderer zwischen einer vollständig vereinten Reihe von Paketen und dem Sortiersystem vorzusehen, weil die benötigte Länge des Sammelförderers groß sein müßte. Entsprechend kann es wünschenswert sein, die Zuführbahnen in zwei oder mehr Zuführbahnen mit je einem kurzen Sammelförderer aufzutrennen und die Paketvereinigung direkt vor dem Sortiersystem vorzunehmen. Mehrfach-Sammelförderer für das Sortiersystem können mit geringeren Geschwindigkeiten laufen, als sie zum Erzielen des gleichen Volumens von Paketen bei einem einzigen Sammelförderer benötigt würden. Dies erhöht auch die Lebenserwartung des Förderers und reduziert den Lärm.

Aus der EP 0 383 615 A1 ist ein Fördersystem mit mindestens zwei Zuführbahnen, von denen Pakete auf einen gemeinsamen Vereinigungsförderer geleitet werden, bekannt. An den Vereinigungsförderer schließt sich ein Sortiersystem an. Eingangsseitig sind die Zuführbahnen mit Förderstrecken eines Beschickungssystems verbunden. Jede der Zuführbahnen ist in vier Förderbänder aufgeteilt. Die in Förderrichtung gesehen ersten drei Förderbänder dienen dazu, zwischen den aufeinanderfolgenden Paketen eine Anfangslücke zu bilden. Hierzu sind die ersten drei Förderbahnen in Förderrichtung gesehen geschwindigkeitsmäßig so abgestuft, daß jeweils die in Förderrichtung nachfolgende Förderbahn etwa 70 % schneller angetrieben wird als die vorhergehende. Der in Förderrichtung gesehen dritte Förderer ist über einen Servomotor angetrieben und über Geschwindigkeitsreduziergetriebe mit den vorhergehenden Förderbändern verbunden. Neben dem Servoantrieb sind an dem als Meßförderer bezeichneten dritten Förderer eine Lichtschranke an der Eingangsseite des Meßförderers vorgesehen und die Möglichkeit über den Encoder des Servomotors in etwa 10⁻²-m-Schritten, die Bandbewegung zu bestimmen. Hierdurch ist es möglich, die Länge eines Pakets sowie den Abstand zu dem nachfolgenden Paket zu bestimmen. Die Meßförderer sind mit einer übergeordneten Steuerung verbunden. An den Meßförderer schließt sich ein Übergabeförderer an, der mit der gleichen Geschwindigkeit wie der sich anschließende Vereinigungsförderer betrieben wird.

Jedes Paket unterliegt nach Unterbrechung des Strahls der Lichtschranke am Eingang des Meßförderers bis zum Erreichen des Übergangs zwischen dem Meßförderer und dem Aufnahmeförderer mit seiner Längsmittellinie der genauen Kontrolle eines Planungsprogramms der Steuerung. Innerhalb dieses Bereiches kann durch das Programm durch gezieltes Beschleunigen oder Abbremsen bzw. Anhalten der Meßförderer der gewünschte bzw. festgelegte Abstand zwischen den einzelnen Paketen herbeigeführt werden. Die programmgeführte Steuerung erfolgt im einzelnen durch Berechnung einer Soll-Ankunftszeit der einzelnen Pakete an der Übergabestelle zwischen dem Meßförderer und dem Aufnahmeförderer in Abgleichung mit den Paketen auf den Meßförderern der parallelen Zuführbahnen und Angleichung der Ist-Ankunftszeiten an diese Soll-Werte. Die Einstellmöglichkeiten des Systems werden begrenzt durch die maximal möglichen Beschleunigungs- bzw. Abbremskräfte, die auf den Meßförderer aufgebracht werden können, ohne daß die Pakete ihre genaue Lage auf dem Förderer erlassen. Sollte hierdurch ein Erreichen der Soll-Werte nicht möglich sein, so erzielt das System zumindest eine Schrumpfung von zu langen Lücken und eine Streckung zu kurzen Lücken.

Unter bestimmten Umständen wird eine Zuführbahn mehr als ein Paket freigeben, bevor von einer anderen Zuführbahn das Paket weitergefördert wird. Falls auf einer Zuführbahn im Vergleich mit der anderen Zuführbahn eine Folge sehr kleiner Pakete auftritt, kann das Zuführsystem nur von der Bahn mit den kleinen Paketen übergeben, während die anderen Zuführbahnen angehalten werden. Dies kann deshalb auftreten, da das Zuführsystem zum Vereinen der Pakete von mehr als einer Zuführbahn die volle Betriebskontrolle über das jeweils folgende Paket haben muß. Diese Kontrolle liegt nicht vor, wenn der Abstand zwischen den vorderen und hinteren Paketen zu gering ist, um das nachfolgende Paket vor der Übergabe auf den Aufnahmeförderer auf die Geschwindigkeit Null abzubremsen. Dieses führt zu Stauungen auf den parallelen Zuführbahnen.

Zusätzlich kann das Zuführsystem Schwierigkeiten mit längeren Paketen haben, da die von den Förderern mit festem Geschwindigkeitsverhältnis gebildete Anfangslücke eine Funktion der Länge der Pakete ist. Bei sehr großen Paketen könnte die Anfangslücke derart groß sein, daß das Zuführsystem bei der Übergabe auf den Aufnahmeförderer Schwierigkeiten bei der Einstellung der Anfangslücke hinab auf eine gewünschte Lückenlänge hat.

Des weiteren ist aus der GB 2 182 299 A ein Fördersystem bekannt, durch das mit zufallsbedingten Abständen untereinander zugeführte Stückgüter bezüglich ihres Abstandes untereinander, ihrer Geschwindigkeit und ihres Abgabezeitpunktes angepaßt an einen Zuführförderer für eine Verpackungs- oder Verarbeitungsmaschine übergeben werden. Das Fördersystem besteht aus insgesamt 8 hintereinander angeordneten Bandförderern. Jeder Bandförderer wird von einem Servomotor angetrieben, über dessen Encoder die Bewegung des Bandes und über einen zugeordnete Tachometer die Geschwindigkeit des Motors meßbar ist. Im Bereich der in Förderrichtung befindlichen Enden jedes Bandförderers ist ein Sensor zum Erkennen der vorderen Kante des Stückguts angeordnet. Die Sensoren, Tachometer und Encoder sind mit einer gemeinsamen programmierbaren Steuerung verbunden. Die ersten 5 Bandförderer haben die Aufgabe, die Abstände zwischen zwei aufeinanderfolgenden Stückgütern durch Beschleunigen bzw. Abbremsen der einzelnen Bandförderer auf einen für die nachfolgende Verpackungs- oder Verarbeitungsmaschine einzustellen. Der 6. Bandförderer erzielt durch Steuerung seiner Geschwindigkeit eine zeitliche Anpassung der Übergabe an den Zufürförderer für die Verpackungs- oder Verarbeitungsmaschine. Der 7. und der 8. Bandförderer dienen zur Angleichung der Geschwindigkeit der Stückgüter an den anschließenden Zuführförderer.

Ausgehend von diesem Stand der Technik liegt der Erfindung die Aufgabe zugrunde, ein Fördersystem mit einem eingangsseitig über mindestens zwei Zuführbahnen verbundenen Sortiersystem zu schaffen, das unabhängig von der Länge der Pakete, die am Ende der Zuführbahnen in Richtung des Sortiersystems vereint ein kontinuierlicher Betrieb der Zuführbahnen ohne Stauungen ermöglicht.

Die vorliegende Erfindung liefert ein Zuführsystem mit gesteuerten Abständen, das einen größeren Durchsatz oder Fluß von Paketen durch das System erlaubt, während die Abschaltzeit des Systems und Schäden an den Paketen minimiert werden. Die vorliegende Erfindung sorgt weiterhin für die Kombination der Funktion der endgültigen Vereinigung von zwei oder mehr Beschickungsbahnen mit der der Beabstandung der Pakete in einem einzigen Vorgang, wobei Pakete von einer Vielzahl von Beschickungsbahnen auf eine Weise zugeführt werden, daß ein wünschenswerter Abstand zwischen den Paketen unabhängig von ihrer Größe entsteht.

Die Erfindung kann in einem Fördersystem mit einem Sortiersystem zur Sortierung von Paketen in ausgewählte Bahnen, mit einem Zuführsystem zur Übergabe von Paketen mit einem gewünschten Abstand zwischen den Paketen zum Sortiersystem und mit einer Steuerung eingesetzt werden. Das Zuführsystem weist wenigstens einen Zuführ-Steuerförderer und einen Anfangslücken-Steuerförderer vor dem Zuführ-Steuerförderer auf. Die Steuerung enthält Mittel zum Steuern der Geschwindigkeit des Zuführ-Steuerförderers zur Bildung des gewünschten Abstands zwischen den Paketen auf dem Sortiersystem und Mittel zum Steuern der Geschwindigkeit des Anfangslücken-Steuerförderers auf eine Weise, daß ein gesteuerter Abstand zwischen den Paketen auf dem Zuführ-Steuerförderer entsteht.

Die Erfindung kann vorteilhaft durch Steuern der Geschwindigkeit des Anfangslücken-Steuerförderers als Funktion der Geschwindigkeit des Zuführ-Steuerförderers und durch Wahl eines variablen Geschwindigkeitsverhältnisses zur Lieferung des gesteuerten Abstands bzw. der Anfangslücke zwischen den Paketen ausgeführt werden.

In einer dargestellten Ausführungsform ist ein erster Servoantrieb zum Steuern der Geschwindigkeit des Zuführ-Steuerförderers und ein zweiter Servoantrieb zum Steuern der Geschwindigkeit des Anfangslücken-Steuerförderers vorgesehen. Die Steuerung enthält ein erstes Auswahlmittel zum Wählen der Geschwindigkeit des Zuführ-Steuerförderers zwecks Bilden eines gewünschten Abstands zwischen den an dem Sortiersystem empfangenen Paketen und zweites Auswahlmittel zum Wählen des Geschwindigkeitsverhältnisses zwischen den beiden Förderern zwecks Ausführen der Anfangslückenfunktion. Die Steuerung stellt die Geschwindigkeit des Anfangslücken-Steuerförderers als Funktion der am ersten Auswahlmittel gewählten Geschwindigkeit des Zuführ-Steuerförderers und des am zweiten Auswahlmittel gewählten Verhältnisses ein. Auf diese Weise ist die Beziehung zwischen dem Zuführ-Steuerförderer und dem Anfangslücken-Steuerförderer eine Herr/Diener-Beziehung (Master/Servant), wobei diese Beziehung variabel und vom Steuermittel auf eindeutige Weise wählbar ist. Die gewünschten Lücken zwischen den an das Sortiersystem abgegebenen Paketen werden zwischen den Endkanten der ersten Pakete und den Vorderkanten der folgenden Pakete definiert. Die Anfangslücke zwischen den Paketen auf jedem Zuführ-Steuerförderer wird gemäß einem anderen Aspekt der vorliegenden Erfindung bezüglich der Längsmittellinien des ersten und der folgenden Pakete eingestellt. Vorzugsweise ist eine konstante Anfangslücke von Mitte zu Mitte gegeben. Wenn Pakete von mehreren Zuführ-Steuerförderern vereint werden, wird die Anfangslücke als Funktion der Zeit gewählt, die ein Zuführ-Steuerförderer zum Abbremsen auf seine kleinste Geschwindigkeit benötigt. Diese Anfangslücke ist ausreichend zum Erzielen einer vollständigen Kontrolle über alle Pakete im Fördersystem.

Gemäß einem weiteren Aspekt der Erfindung wird das Zuführsystem bei einer ersten Bahngeschwindigkeit und das Sortiersystem bei einer zweiten Bahngeschwindigkeit betrieben, die von der ersten Bahngeschwindigkeit unterschiedlich ist. Steuermittel sind für die Steuerung des Zuführsystems auf eine Weise vorgesehen, daß gewünschte Lücken zwischen den Paketen bewirkt werden, nachdem die Pakete im Sortiersystem empfangen wurden. Dieser Aspekt der Erfindung erlaubt dem Zuführsystem auf vorteilhafte Weise, bei einer langsameren und somit genaueren Geschwindigkeit Zu arbeiten, während gewünschte Lücken zwischen den Paketen an der Stelle erzeugt werden, an der solche Lücken notwendig sind. Diese befindet sich am Sortiersystem, wobei ausreichende Lücken notwendig sind, um die Sortierung der Pakete zu erleichtern, jedoch sind zu große Lücken nicht wünschenswert wegen der resultierenden Verringerung im Durchsatz des Systems. Dieser Aspekt der Erfindung kann in einem Fördersystem ausgeführt werden, bei dem die Steuerung Geschwindigkeitssteuermittel betätigt als Funktion des Verhältnisses der Austrittsgeschwindigkeit des Zuführsystems zur Geschwindigkeit des Sortiersystems, ebenso wie der gewünschten Lücken zwischen den Paketen und der Länge jedes Pakets.

Diese und andere Ziele, Vorteile und Merkmale der vorliegenden Erfindung werden aus der folgenden Beschreibung in Verbindung mit den Zeichnungen deutlich.
- Fig. 1: ist eine Draufsicht eines Fördersystems gemäß der vorliegenden Erfindung;
- Fig. 2: ist eine Draufsicht eines Mehrfachbahn-Zuführsystems; gemäß
- Fig. 3: ist ein Blockschema eines Schnittstellenkreises zwischen dem Mikro-Computer und der Servomotorsteuerung für das System nach Fig. 2;
- Fig. 4a-4d: sind logische Flußdiagramme des zur Steuerung der Anfangslückenfunktion des Systems nach Fig. 2 benutzten Programms;
- Fig. 5: ist ein Diagramm der Fördergeschwindigkeit für Zuführ-Steuer- und Anfangslücken-Steuerförderer eines Förderbahnteils des Systems nach Fig. 2;
- Fig. 6: ist eine Draufsicht einer Steuertechnik zur Messung der Breite von Paketen;
- Fig. 7: ist eine die Wirkung einer Geschwindigkeitsänderung am Übergang zwischen einem Zuführsystem und einem Sortiersystem darstellende Draufsicht.

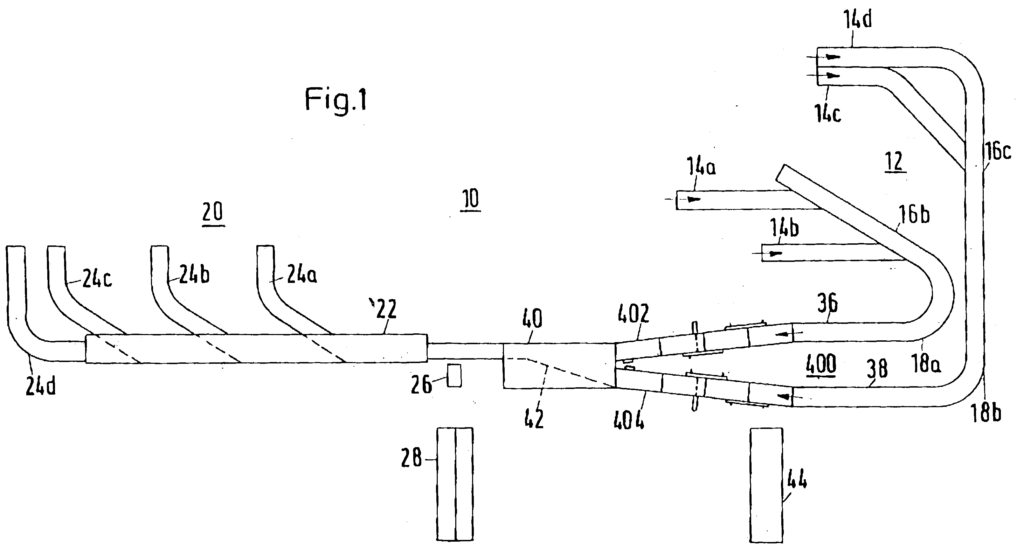

Unter Bezug auf die Figur 1 umfaßt ein Fördersystem, allgemein mit 10 bezeichnet, ein Beschickungssystem 12 mit einer Vielzahl von Beschickungsförderbahnen 14a bis 14d. Die Beschickungsbahn 14a vereint sich mit einer anderen Beschickungsbahn 14b am Übergang 16b und bildet eine kombinierte Beschickungsbahn 18a. Die Beschickungsbahnen 14c und 14d vereinen sich am Übergang 16c und bilden eine kombinierte Beschickungsbahn 18b. Das Fördersystem 10 weist weiterhin ein Sortiersystem 20 mit einem Sortierförderer 22 und einer Vielzahl von Übergabebahnen 24a bis 24d. Das Sortiersystem 20 kann weiterhin einen Laser-Scanner 26 zum Einlesen von Bar-Codes auf den in den Förderer 22 eintretenden Paketen in eine Sortiersteuerung 28 aufweisen, welche jeden Produkt-Bar-Code mit einer im Speicher abgelegten Tabelle vergleicht, um die geeignete Übergabebahn 24a bis 24d zum Entnehmen der Pakete zu bestimmen und um eine Übergabevorrichtung (nicht gezeigt) zum gewünschten Zeitpunkt zu aktivieren, damit das Paket seitlich vom Sortierförderer 22 in die geeignete Übergabespur 24a bis 24d verschoben wird.

Das Fördersystem enthält weiterhin ein Mehrfachbahn-Zuführsystem 400, das in der dargestellten Ausführungsform eine erste Zuführbahn 32 und eine zweite Zuführbahn 34 aufweist. Obwohl die Erfindung als Zuführsystem mit zwei Zuführbahnen dargestellt ist, kann sie auch in einem Zuführsystem mit nur einer Bahn oder mit mehr als zwei Bahnen ausgeführt werden. Besondere Vorteile der Erfindung können in einem Zuführsystem mit nur einer Zuführbahn realisiert werden, und die Zahl von mehrfachen Zuführbahnen, auf die sie angewandt werden kann, ist theoretisch unbegrenzt. Die Beschickungsbahn 18a ist mit der ersten Zuführbahn 32 durch einen Sammler 36 verbunden, der die auf den Eintritt in die erste Zuführbahn 402 wartenden Produkte sammelt. Ein Sammler 38 befindet sich zwischen der Beschickungsbahn 18b und einer zweiten Zuführbahn 404. Ein Ausrichtförderer 40 empfängt die von den Zuführbahnen 402 und 404 freigegebenen Pakete und weist eine Führungsstange 42 zum seitlichen Verschieben der von der Bahn 404 freigegebenen Pakete in eine einzige Reihe mit den von der Bahn 404 freigegebenen Paketen auf. Die Pakete werden vom Ausrichtförderer 40 auf den Sortierförderer 22 abgegeben. Das Zuführsystem 400 enthält weiterhin eine Steuerung 44, die Eingangssignale von den Zuführbahnen 402 und 404 zugeordneten Eingabevorrichtungen und Ausgangssignale zur Steuerung der Geschwindigkeiten der Bahnen 402 und 404 erzeugt. Die Steuerung 44 kann zusätzlich mit der Sortiersteuerung 28 und anderen Steuerungsteilen des Fördersystems 10 in Verbindung stehen.

Das Zuführsystem 400 stellt eine gewünschte Lücke zwischen von Mehrfach-Bahnen zugeführten Paketen auf eine Weise her, die die Bahn, deren Differenz zwischen VORGESCHLAGENE SAZ und SOLL-SAZ minimal ist, veranlaßt, ein Paket freizugeben. Unter bestimmten Umständen wird eine Bahn mehr als ein Paket freigeben, bevor eine andere Bahn ihr Paket freigibt. Falls auf einer Bahn eine Folge sehr kleiner Pakete auftritt, im Vergleich mit der anderen Bahn(en), kann das System 400 nur von der Bahn mit den kleinen Paketen übergeben, während die andere Bahn(en) festgehalten wird. Dies kann deshalb auftreten, da das System zum Vereinen der Pakete von mehr als einer Bahn volle Betriebskontrolle über das folgende Paket haben muß. Diese Bedingung liegt vor, wenn der Abstand zwischen den vorderen und hinteren Paketen ausreichend ist, um dem Förderer das Tragen des auf Geschwindigkeit Null abzubremsenden folgenden Pakets zu erlauben (HALTE-ABSTAND). Nur unter solchen Umständen der vollen Kontrolle über die Pakete auf beiden Bahnen kann ein Vereinen von Paketen von mehrfachen Zuführbahnen gelingen.

Erfindungsgemäß weist das Fördersystem Mittel zum Verkleinern des Variationsbereichs für die Lücken zwischen den Paketen vor der Ausführung der Zuführfunktion auf. Dies wird auf eine Weise erreicht, daß ein konstanter Mitte-zu-Mitte-Abstand zwischen den auf einen Zuführsteuerförderer übergegebenen Paketen erzeugt wird. Auf diese Weise wird die kleine Lücke zwischen kleinen Paketen vergrößert, und die große Lücke zwischen großen Paketen wird verkleinert. Dies wird durch Aufteilen jeder Zuführförderbahn in zwei Tandem-Teile erreicht, von denen jeder durch einen unabhängigen Servomotor angetrieben wird. Anstatt drei Fördererteilen, deren Geschwindigkeitsverhältnisse fest sind, wendet diese Ausführungsform vier Fördererteile für jede Bahn an, wobei die ersten beiden ein festes Geschwindigkeitsverhältnis haben und der dritte und der vierte ein festes Geschwindigkeitsverhältnis haben. Das Geschwindigkeitsverhältnis der ersten und zweiten Fördererteile zu den dritten und vierten Teilen ist wahlweise variabel und nicht fest. Die dritten und vierten Fördererteile (die am weitesten vorn im Produktfluß sind) bilden einen Zuführsteuerförderer, der Pakete in Koordination mit den anderen Zuführbahnen abgibt, um gewünschte Lücken zwischen den Paketen auf dem Sortiersystem zu erzielen. Die ersten und zweiten Fördererteile bilden einen Anfangslückensteuerförderer, der bei einer Geschwindigkeit betrieben wird, die auf die Geschwindigkeit des Zuführsteuerförderers entsprechend einem Verhältnis bezogen ist, das durch das Steuerungsmittel variabel und wählbar ist. Da das Geschwindigkeitsverhältnis zwischen dem Anfangslückensteuerförderer und dem Zuführsteuerförderer die Lücke zwischen den auf den Zuführbändern positionierten Paketen durch Variieren dieses Verhältnisses bestimmt, kann eine Anfangslücke zwischen den Paketen auf eine gesteuerte Weise erzielt werden, um den Bereich der Lücken zu verkleinern, die vom Zuführsteuerförderer eingestellt werden müssen.

Die Anfangslücke zwischen den Paketen wird durch Variation des Verhältnisses zwischen der Geschwindigkeit des Anfangslückensteuerförderers und der Geschwindigkeit des Zuführsteuerförderers erreicht. Die die Steuerung handhabenden Ausgabevorrichtungen sind jedoch die Servomotoren für den Anfangslückensteuerförderer und den Zuführsteuerförderer. Um die Notwendigkeit einer übermäßigen Rechnerzeit zum Regeln der Geschwindigkeitsverhältnisse zwischen den beiden Servomotoren zu vermeiden, ist ein einziger Interfacekreis vorgesehen, der Computerbefehle der für den Anfangslückensteuerförderer benötigten Geschwindigkeit und des Geschwindigkeitsverhältnisses empfängt, das zwischen dem Anfangslückensteuerförderer und dem Zuführsteuerförderer benötigt wird, und der Ausgangssignale zur Wahl der Geschwindigkeiten für beide Servomotoren auf eine Weise erzeugt, daß die benötigte Koordination gegeben ist. Entsprechend ist der Betrag der zur Steuerung der Geschwindigkeiten des Anfangslückensteuerförderers und des Zuführsteuerförderers minimiert.

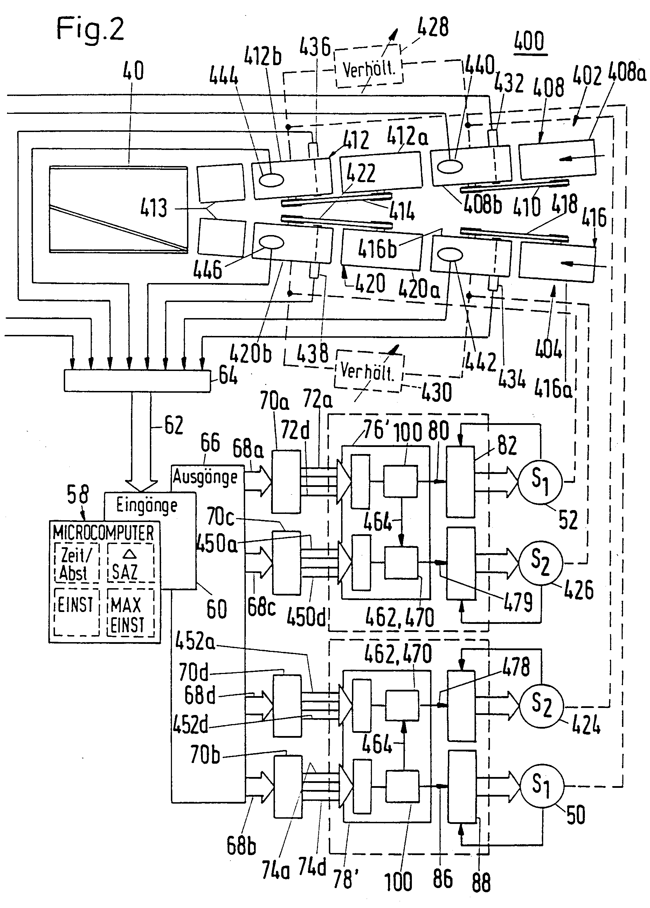

Das Zuführsystem 400 weist gemäß Fig. 2 eine erste Förderbahn 402, eine zweite Förderbahn 404, ein Paar von Aufnahmeförderern 413 zur Aufnahme von Paketen von den Förderbahnen 402 und 404 und einen Förderer 40 zum Vereinen der Pakete in eine einzige Reihe auf. Die erste Förderbahn 402 beinhaltet einen Anfangslückensteuerförderer 408 mit einem ersten Fördererteil 408a und einem zweiten Fördererteil 408b, deren gegenseitige Geschwindigkeit durch ein Geschwindigkeitsreduziergetriebe 410 fest geregelt wird. Die erste Förderbahn 402 beinhaltet auch einen Zuführsteuerförderer 412 mit einem ersten Fördererteil 412a und einem zweiten Fördererteil 412b, deren Geschwindigkeiten durch ein Geschwindigkeitsreduziergetriebe 414 fest geregelt werden. Auf gleiche Weise beinhaltet die zweite Förderbahn 404 einen Anfangslückensteuerförderer 416 mit einem ersten Fördererteil 416a und einem zweiten Fördererteil 416b, deren Geschwindigkeiten durch ein Geschwindigkeitsreduziergetriebe 418 fest geregelt werden, und einen Zuführsteuerförderer 420 mit einem ersten Fördererteil 420a und einem zweiten Fördererteil 420b, deren Geschwindigkeiten durch ein Geschwindigkeitsreduziergetriebe 422 fest geregelt werden. Die Geschwindigkeitsreduziergetriebe 410, 418 veranlassen die Fördererteile 408b, 416b zu einem schnelleren Betrieb als die betreffenden Teile 408a, 416a, die sich davor befinden. Auf gleiche Weise veranlassen die Geschwindigkeitsreduziergetriebe 414, 422 die Fördererteile 412b, 420b zu einem schnelleren Betrieb als die betreffenden Teile 412a, 420a, die sich davor befinden. Die Aufnahmeförderer 413 und der Ausrichtförderer 40 werden mit konstanter gleicher Geschwindigkeit betrieben.

Die erste Zuführbahn 402 weist einen S₁-Servomotor 50 zum Antreiben der Zuführsteuerfördererteil 412a, 412b sowie einen S₂-Servomotor 424 zum Antreiben der Anfangslückensteuerfördererteile 408a, 408b auf. Auf gleiche Weise weist die zweite Zuführbahn 404 einen S₁-Servomotor 52 zum Antreiben der Zuführsteuerfördererteil 420a, 420b sowie einen S₂-Servomotor 426 zum Antreiben der Anfangslückensteuerfördererteile 416a, 416b auf. Obwohl die S₁- und S₂-Servomotoren für jede Förderbahn zu unabhängigen Geschwindigkeiten geeignet sind, werden sie, wie unten näher beschrieben, auf eine Weise gesteuert, daß ein variables Geschwindigkeitsverhältnis erzeugt wird, dargestellt bei 428, zwischen dem Anfangslückensteuerförderer 408 und dem Zuführsteuerförderer 412 auf einer ersten Zuführbahn 402 und ein variables Geschwindigkeitsverhältnis 430 zwischen dem Anfangslückensteuerförderer 416 und dem Zuführsteuerförderer 420 auf einer zweiten Zuführbahn 404. Die variablen Verhältnisse 428 und 430 sind gestrichelt dargestellt, da es an sich keine mechanische Kupplung zwischen dem Anfangslückensteuerförderer kensteuerförderer und dem Zuführsteuerförderer auf jeder Zuführbahn gibt.

Ein dem Mikro-Computer 58 zugeordneter Eingabemodul 64 empfängt Eingangssignale von Fotoempfängern 432, 434, die jeweils den Anfangslückensteuerfördererteilen 408b, 416b zugeordnet sind, und von Fotoempfängern 436, 438, die jeweils den Zuführsteuerfördererteilen 412b, 420b zugeordnet sind. Der Eingabemodul 64 empfängt darüberhinaus Eingangssignale von Impulspositionsanzeigern (IPA) 440, 442, 444 und 446, die jeweils den Fördererteilen 408b, 416b, 412b und 420b zugeordnet sind. Die IPA 440, 442, 444 und 446 senden nach etwa 1,27 10⁻²m (0,5 inch) Bandbewegung des Zugehörigen Förderers 408b, 412b, 416b, 420b einen Impuls. Der Eingabemodul 64 liefert parallele Eingänge 62 an den Mikro-Computer 58. Der Mikro-Computer 58 beinhaltet eine Ausgangsleiterplatte 66, die parallele Ausgänge 68a, 68b, 68c bzw. 68d an die Ausgahemodule 70a, 70b, 70c bzw. 70d liefert. Der Ausgabemodul 70a liefert Ausgangssignale auf vier parallelen Leitungen 72a bis 72d, die einem Servo-Interfacekreis 76' als eine der vier Laufgeschwindigkeiten des Servomotors 52 zugeführt werden (nur drei Laufgeschwindigkeiten werden in der dargestellten Ausführungsform benutzt). Der Ausgabemodul 70b liefert Ausgangssignale auf den Leitungen 74a bis 74d, die einen Servo-Interfacekreis 78' als Laufgeschwindigkeit des Servomotors 50 zugeführt werden. Der Ausgabemodul 70c liefert eine Kombination von Ausgangssignalen auf den Leitungen 450a bis 450d, die einem Servo-Interfacekreis 76' als eine Verhältniswahl zur Aufstellung der Geschwindigkeit des S₂-Servomotors 426 relativ zur Geschwindigkeit des S₁-Servomotors 52 zugeführt werden. Der Ausgabemodul 70d liefert eine Kombination von Ausgangssignalen auf den Leitungen 452a bis 452d, die einem Servo-Interfacekreis 78' als eine Verhältniswahl zur Aufstellung der Geschwindigkeit des S₂-Servomotors 424 relativ zur Geschwindigkeit des S₁-Servomotors 50 zugeführt werden.

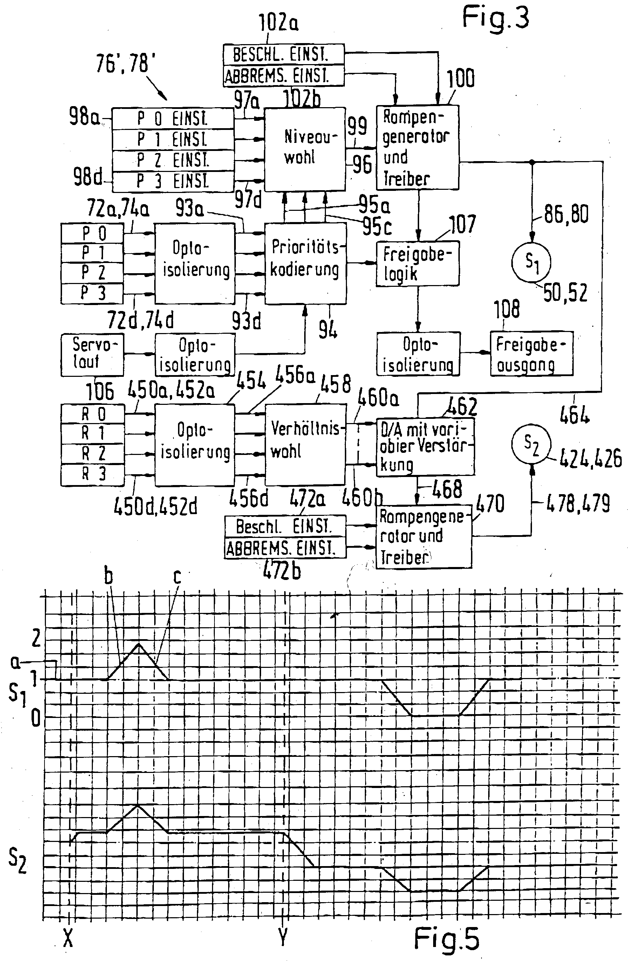

Die Servo-Interfacekreise 76', 78' beinhalten im wesentlichen die gleichen Komponenten wie die Servo-Interfacekreise 76, 78 zum Liefern eines Gleichspannungsausgangssignals auf den Leitungen 86 bzw. 88 an die S₁-Servomotoren 52, 50. Zusätzlich enthält jeder Servo-Inter76', 78' einen Optoisolationskreis 454 zum Empfangen der Verhältniswahl-Eingangsleitungen 450a bis 450d oder 452a bis 452d und erzeugt entsprechende Ausgänge 456a bis 456d an einen Verhältniswahlkreis 458 (Fig. 3). Der Verhältniswahlkreis 458 reagiert auf den Zustand der Leitungen 456a bis 456d, die sich in Kombination in einem von 16 Zuständen befinden können, und erzeugt einen parallelen digitalen Ausgang auf den Leitungen 460a-460h entsprechend dem Zustand der Leitungen 456a bis 456d. Das Signal auf den Leitungen 460a-460h, welches ein 8-Bit-Wort ist, wird einem Digital/Analog-Wandler (DAW) 462 mit variabler Verstärkung zugeführt, der auch einen Zuführ-Servogeschwindigkeitssignaleingang auf der Leitung 464 entsprechend dem analogen, dem entsprechenden S₁-Motor 50, 52 auf der Leitung 80, 86 zugeführten Gleichspannungssignal empfängt. Das Digitalwort aus den Leitungen 460a-460h entspricht einem von 16 voreingestellten Verhältniswerten, aus denen der Mikro-Computer 58 wählen kann. Das Analogsignal auf Leitung 464 ist proportional zur Geschwindigkeit des S₁-Motors 50, 52. Der Digital/Analog-Wandler 462 mit variabler Verstärkung erzeugt ein analoges Gleichspannungssignal auf Leitung 468, das das analoge Äquivalent des Digitalworts auf Leitung 460 ist, multipliziert oder verkleinert mit dem Analogsignal auf Leitung 464. Das Analogsignal auf Leitung 468 stellt eine für den S₂-Motor 424, 426 gewählte Geschwindigkeit dar. Die Leitung 468 wird einem Rampengenerator- und Treiberkreis 470 zugeführt, der einen Ausgang auf Leitung 478, 479 erzeugt, der auf Änderungen im Signalniveau auf der Leitung 468 auf die gleiche Weise reagiert, wie der Rampengenerator- und Treiberkreis 100 auf Änderungen im Signalniveau auf der Leitung 99 reagiert. Der Rampengenerator- und Treiberkreis 470 empfängt auch Eingänge 472a, 472b, die eine manuelle Wahl der Reaktionsgeschwindigkeit des Ausgangs 478, 479 auf Änderungen im Analogsignal auf Leitung 468 liefern. Das Signal auf Leitung 478, 479 liefert ein Anfangslücken-Servogeschwindigkeitsausgangssignal zum Aufstellen der Geschwindigkeit des betreffenden S₂-Motors 424, 426. Ein Freigabeausgang 108 wird sowohl dem S₁-Motor wie dem S₂-Motor zur selektiven Freigabe oder Nicht-Freigabe beider Motoren zusammen zugeführt.

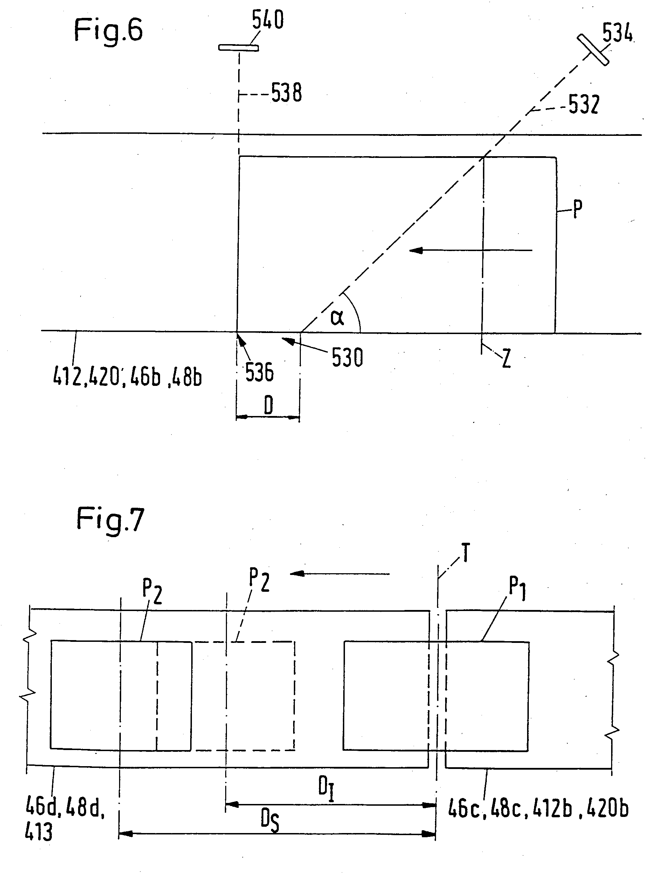

Der Betrieb der Servo-Interfacekreise 76', 78' kann durch Bezug auf Fig. 3 und 5 verstanden werden. In Figur 5 ist das Ausgangssignal der Leitungen 80, 86 an den betreffenden S₁-Motor als beschleunigend von der Nominalgeschwindigkeit 1 bei (a) zur erhöhten Laufgeschwindigkeit 2 bei (b) und dann abbremsend zurück zur Nominalgeschwindigkeit bei (c) dargestellt. Das auf den Leitungen 478, 479 an den betreffenden S₂-Motor 424, 426 gegebene Signal ist als die Nominalgeschwindigkeit des S₁-Motors bei (a) nachführend gezeigt, bis eine Änderung im Verhältniswahlsignal auf den Leitungen 450a bis 450d oder 452a bis 452d bei X empfangen wird, zu welcher Zeit die Geschwindigkeit des S₂-Motors erhöht wird, obwohl die Geschwindigkeit des S₁-Motors konstant bleibt. Die Geschwindigkeit des S₂-Motors nimmt mit der von S₁ bei (b) zu und nimmt mit der von S₁ bei (c) ab, aber das Verhältnis zwischen S₁ und S₂ bleibt konstant. Am Punkt Y wird das Verhältniswahlsignal erniedrigt, sodaß die Geschwindigkeit des S₂-Motors bezüglich der des S₁-Motors abnimmt. Der Zweck der gesteuerten Rampe zwischen den Geschwindigkeitsänderungen des S₂-Motors ist der gleiche wie für den S₁-Motor, nämlich übermäßige Beschleunigungen und Abbremsungen zu vermeiden, wodurch die Pakete umkippen könnten oder Schlupf entstehen könnte. In der dargestellten Ausführungsform ist die Rampe für den S₁-Motor auf 0,4 g und für den S₂-Motor auf 0,5 g eingestellt.

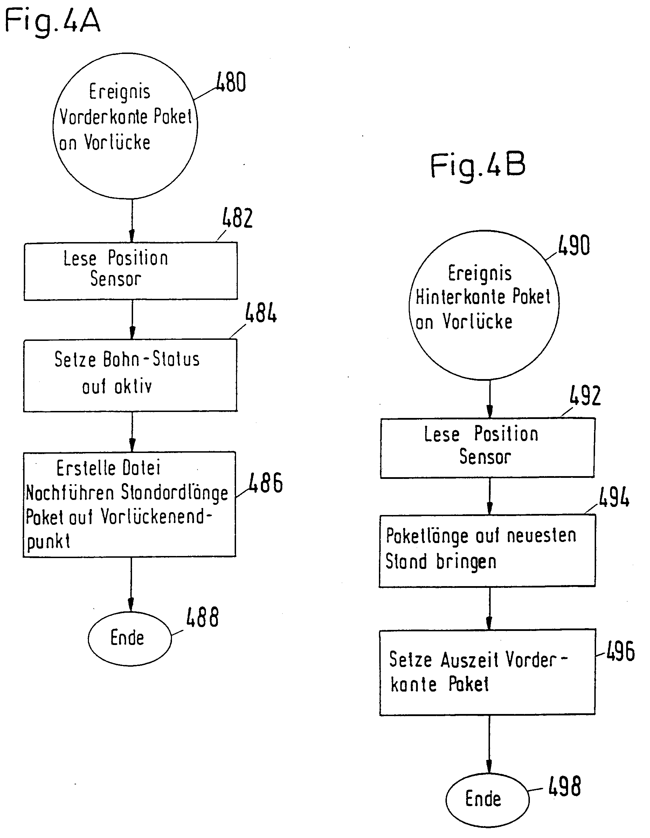

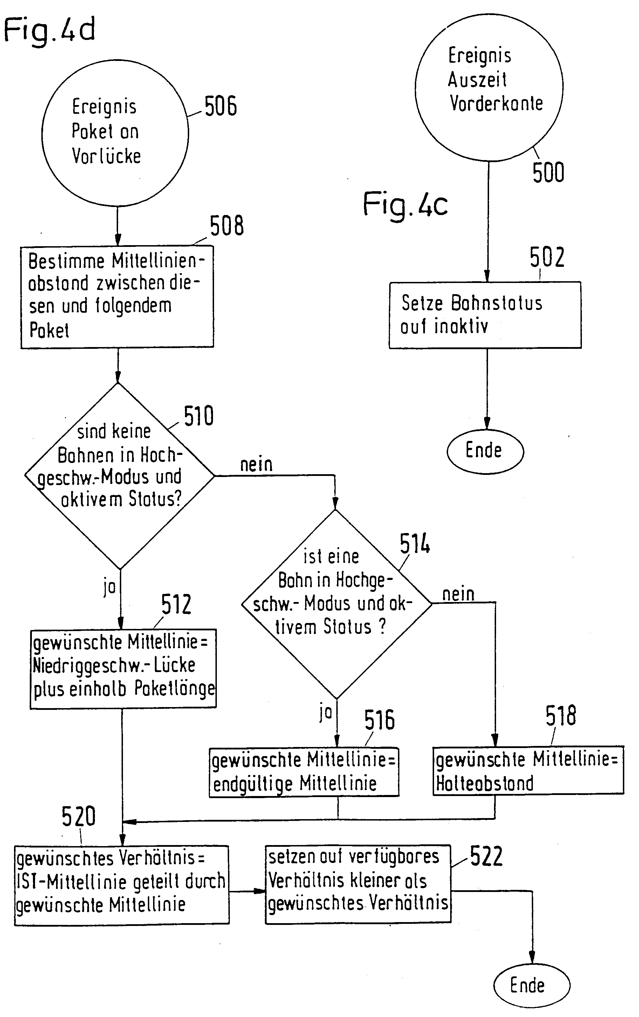

Der Betrieb des Zuführsystems 400 kann durch Bezug auf Fig. 2 und 4a-4d verstanden werden. Wenn ein Paket vom Anfangslückenfördererteil 408a bzw. 416a nach 408b, 416b übergeben wird, verlängert die Geschwindigkeitszunahme die Lücke zu einem folgenden Paket. Wenn die Vorderkante des Pakets den Fotoempfänger 432, 434 erreicht, löst das System ein Ereignis "Vorderkante des Pakets an Vorlücke" 480 aus (Fig. 4a). Da die Software des Computers 448 ereignisbezogen ist, veranlaßt das Auftreten des Ereignisses 480 den Computer, den Wert des betreffenden Positionssensors 440, 442 bei 482 zu lesen und einen Zustandsmerker bei 484 zu setzen, der anzeigt, daß die bestimmte Förderbahn 402, 404 bei 484 aktiv ist. Die Steuerung erstellt dann eine Datei bei 486 für das bestimmte, vom Fotoempfänger bei 486 erfaßte Paket. Die erstellte Datei enthält Standardwerte für die Länge des Pakets und den Abstand zwischen dem Längsmittelpunkt des Pakets und dem Vorlückenausgangspunkt, welches der Punkt zwischen den Förderern 408b und 412a oder 416b und 420a ist. Das Programm wird dann bei 488 verlassen.

Wenn der Fotoempfänger 432, 434 die Hinterkante des gleichen Pakets erfaßt, löst die Steuerung ein Ereignis "Hinterkante des Pakets an Vorlücke" 490 aus, welches die Steuerung veranlaßt, den gegenwärtigen Wert des Positionssensors 440, 442 bei 492 zu lesen und die Standardwerte der Paketlänge bei 494 auf Basis der Ablesungen des Positionssensors bei 482 und 492 auf den neuesten Stand zu bringen. Ein interner Softwarezähler, der in Reaktion auf die Ausgangsimpulse des Positionssensors 440, 442 dekrementiert wird, wird bei 496 gestartet, und die Routine wird bei 498 verlassen. Der bei 496 eingestellte Zeitzähler für die Vorderkante dekrementiert weiter, bis ein weiteres Ereignis "Vorderkante des Pakets an Vorlücke" 480 auftritt. Falls das Ereignis 480 nicht auftritt, bevor die Zeit für die Vorderkante bei 496 vollständig dekrementiert ist, veranlaßt ein Ereignis "Vorderkante-Auszeit" 500 die Steuerung, den aktiven/inaktiven Zustand der Leitung bei 502 auf "inaktiv" zu setzen und die Routine bei 504 zu verlassen. Der inaktive Zustand zeigt an, daß keine Pakete auf der betreffenden Bahn am Zuführsystem empfangen werden.

Die Steuerung führt die Position der Pakete im Bereich der Vorlückensteuerung zwischen den Fotoempfängern 432, 434 und den Positionssensoren 440, 442 nach. Wenn die Mittellinie des Pakets im Bereich der Vorlückensteuerung die Lücke zwischen den Förderern 408b, 416b und 412a,420 erreicht, löst ein Ereignis "Paket an Vorlücke" 506 eine Routine aus, bei der der Mittellinienabstand zwischen dem Paket und dem folgenden Paket bei 508 bestimmt wird (Fig. 4d). Die Steuerung bestimmt dann bei 510, ob es irgendwelche Bahnen sowohl im Hochgeschwindigkeitsmodus wie auch im aktiven Status gibt. Eine Bahn kann vom Bediener des Systems in den Nicht-Hochgeschwindigkeitsmodus gesetzt werden, oder als Ergebnis eines Bedienungsfehlers, wie z.B. ein umgefallenes Paket. Der aktive/inaktive Status wird bei 484 oder 502 in Reaktion auf die Anwesenheit oder Abwesenheit von Paketen auf der Bahn eingestellt. Falls es keine Bahnen gibt, die sowohl im Hochgeschwindigkeitsmodus wie auch im aktiven Status sind, geht die Steuerung auf 512 über, wo eine Niedriggeschwindigkeitszuführsteuefunktion durchgeführt wird. Eine SOLL-MITTELLINIE wird als ein Wert berechnet, der gleich einer gewünschten Lücke zwischen vom Zuführsteuerförderer 412b, 420b übergebenen Paketen plus dem Durchschnitt der Längen des Pakets im Bereich der Vorlückensteuerung und des folgenden Pakets ist.

Falls bei 510 festgestellt wird, daß das System nicht in einem Zustand ist, wo es keine Bahnen sowohl im Hochgeschwindigkeitsmodus wie auch im aktiven Status gibt, geht die Steuerung auf 514 über, wo festgestellt wird, ob es nur eine Bahn in einem Hochgeschwindigkeitsmodus und aktiven Status gibt, oder mehr als eine Bahn in einem solchen Zustand. Falls bei 514 festgestellt wird, daß nur eine Bahn in einem Hochgeschwindigkeitsmodus und aktiven Status ist, ist die Steuerung in einem Einbahn-Zuführmode, und die Steuerung bestimmt bei 516 eine SOLL-MITTELLINIE zwischen Paketen im Bereich der Vorlückensteuerung als gleich einer ENDGÜLTIGEN MITTELLINIE. Wie unten näher erläutert wird, muß man sich wegen des Einbahn-Zuführmodes des Systems nicht Sorgen über das Vereinen mit Paketen von einer anderen Bahn machen. Die Lücke zwischen den Paketen wird vom Zuführsteuerteil des Steueralgorithmus bestimmt.

Falls bei 514 festgestellt wird, daß nicht nur eine Bahn in einem Hochgeschwindigkeitsmodus und aktiven Status ist, ist das System in einem Mehrfachbahn-Zuführmode 518. In einem solchen Mode ist es für Pakete im Bereich der Vorlückensteuerung einer bestimmten Bahn notwendig, daß sie mit Paketen einer anderen Bahn vereint werden. Um das Vereinen zu bewirken, muß der betreffende Zuführförderer 412, 420 die vollständige Kontrolle über das hintere Paket nach dem vorderen Paket übernehmen können, nachdem das vordere Paket zum Aufnahmeförderer 413 übergeben worden ist. Dies kann durch Einstellen der SOLL-MITTELLINIE zwischen dem vorderen und dem folgenden Paket an einem Minimalabstand erreicht werden, sodaß der bei der gegenwärtigen Geschwindigkeit laufende Zuführförderer auf Geschwindigkeit Null abgebremst werden kann (HALTE-ABSTAND). Nur unter solchen Bedingungen ist auf dem Zuführförderer vollständige Kontrolle über das folgende Paket gegeben.

Wenn die SOLL-MITTELLINIE bei 512, 516 oder 518 bestimmt ist, geht die Steuerung auf 520 über, wo der Wert des variablen Verhältnisses 428, 430 (SOLL-VERHÄLTNIS) aufgestellt wird. Das SOLL-VERHÄLTNIS wird durch Dividieren der IST-Mittellinie zwischen den Paketen im Bereich einer Vorlückensteuerung durch die bei 512, 516 oder 518 erstellte SOLL-MITTELLINIE berechnet. Wenn das SOLL-VERHÄLTNIS berechnet wird, erzeugt die Steuerung Wahlsignale bei 522 auf den Leitungen 450a bis 450d oder 452a bis 452d, um das dichteste Verhältnisinkrement zu wählen, das kleiner als das berechnete SOLL-VERHÄLTNIS ist. Die Routine wird bei 524 verlassen. Beim Bestimmen des SOLL-VERHÄLTNISSES ignoriert die Steuerung alle Effekte vom Rampengenerator- und Treiberkreis 420. Alle dadurch resultierenden Fehler sind zu klein, um störend zu sein.

In der dargestellten Ausführungsform arbeiten die Anfangslückensteuerfördererteile 408b, 416b mit einer Nominalgeschwindigkeit von etwa 1,5 m/s (300 Fuß pro Minute) in einem Geschwindigkeitsbereich von etwa 0-2,3 m/s (0 bis 450 Fuß pro Minute). Die Anfangslückensteuerfördererteile 408a, 416a sind mit den Teilen 408b, 416b über ein 1:2,1-Geschwindigkeitsreduziergetriebe verknüpft, um eine Nominalgeschwindigkeit der Fördererteile 408a, 416a von etwa 0,73 m/s (143 Fuß pro Minute) zu liefern. Die Nominalgeschwindigkeit der Zuführsteuerfördererteile 412b, 420b ist etwa 2 m/s (400 Fuß pro Minute), mit einem Geschwindigkeitsbereich von etwa 0-3 m/s (0 bis 600 Fuß pro Minute). Eine mechanische 1:1,3333-Kupplung mit dem Zuführfördererteil 410a, 420a liefern eine Reduzierung auf etwa 1,5 m/s (300 Fuß pro Minute) Nominalgeschwindigkeit der Zuführsteuerfördererteile 412a, 420a. Der Bereich der wählbaren Verhältnisse ist von 0:1 bis 1:1 in 16 wählbaren Stufen. Aus Gründen, die unten näher beschrieben werden, werden die Aufnahmeförderer 413 und der Ausrichtförderer 40 mit einer konstanten Geschwindigkeit von 540 Fuß pro Meter betrieben, was höher ist als die Nominalgeschwindigkeit der Zufuhrfördererteile 412b, 420b.

Obwohl oben die bevorzugte Ausführungsform beschrieben worden ist, schlagen sich Variationen für den Fachmann von selbst vor. Obwohl die elektronischen Kupplungen 428, 430 ein Maximalverhältnis von 1:1 in der dargestellten Ausführungsform liefern, ist es möglich, ein Verhältnis größer als 1:1 zu haben, sodaß der Anfangslückenförderer die durch die Beschleunigung zwischen den Förderern 408a, 416a bzw. 408b, 416b erzeugte Anfangslücke zwischen den Paketen verkürzen oder verlängern kann. Obwohl separate Positionssensoren 444, 446 für die Zuführsteuerförderer und Positionssensoren 440, 442 für die Anfangslückensteuerförderer vorgesehen sind, ist es möglich, die von den Positionssensoren 444, 446 für die Zufühlsteuerförderer gelieferte Information zusammen mit dem vom System gewählten Geschwindigkeitsverhältnis zwischen dem Anfangslückensteuerförderer und dem Zuführsteuerförderer zu benutzen, um eine Positionsanzeige für Pakete auf dem Anfangslückensteuerförderer zu erhalten.

Die vorliegende Erfindung erzeugt engere Variationen für den Kante/Kante-Abstand (oder die Lücke) zwischen Paketen im Zuführsystem. Dies wird durch Erzeugen eines konstanten Abstands zwischen den Längsmittellinien von Paketen unabhängig von ihrer Länge erreicht. Indem die Variationen der Lücken vor der Zuführsteuerzone reduziert werden, ist der Zuführalgorithmus in der Lage, beim Erzeugen der gewüschten Lücken zwischen Paketen wirksamer zu arbeiten, die von mehrfachen Bahnen vereint werden. Ein zusätzlicher Nutzen ist, daß, obwohl das Zuführsteuersystem immer noch Pakete zum Übergeben auf Basis desjenigen, dessen Vorderkante an einer geschätzten Ankunftszeit ankommt, die am dichtesten zur gewünschten Ankunftszeit ist, auswählt; es eine größere Tendenz zum Abwechseln der Übergabe von Paketen zwischen Mehrfachbahnen gibt, anstatt sie wiederholt von der gleichen Bahn zuzuführen, wenn kleinere Pakete in das System eintreten. Weiterhin werden zu große Lücken zwischen größeren Paketen reduziert. Auf theoretischer Basis wird geschätzt, daß der Durchsatz des Zuführsystems um etwa 18% steigen wird. Dies ist eine erhebliche Verbesserung, wenn man den gewaltigen Durchsatz, den das Zuführsystem 30 erzeugt, mit bekannten Systemen vergleicht.

Die zwischen den einem Sortiersystem zugeführten Paketen erstellten Lücken dienen zur leichteren Sortierung der Pakete. Solche Lücken können von gleichförmiger Länge sein oder eine Funktion anderer Variablen sein, wie z.B. der Breite des Pakets. Zum Beispiel lenken viele Sortiersysteme Pakete auf eine Weise auf Bahnen, daß das Paket während des Bewegens gedreht wird. Die Drehung des Pakets macht dieses in Bewegungsrichtung des Förderers als Funktion der Breite des Pakets länger. Während die gewünschte Lücke am Sortiersystem benötigt wird, wird sie im Zuführsystem festgelegt.

Obwohl die Lücke oder der Kante/Kante-Abstand zwischen Paketen im Zuführsystem festgelegt wird, ist der für das saubere Zuführen und Vereinen von Paketen von Mehrfachbahnen benötigte Abstand zwischen den Paketen wesentlich kleiner als die endgültige gewünschte Lücke, die am Sortiersystem benötigt wird. Entsprechend verwendet die vorliegende Erfindung diese Überlegung, indem die Bahngeschwindigkeiten des Zuführsystems bezüglich des Sortiersystems verlangsamt werden, um die Pakete genauer zuzuführen, während die Lücken zwischen den Paketen im Zuführsystem festgelegt werden, was in den gewünschten, für die Sortierung notwendigen Lücken auf dem Sortiersystem resultiert. Die Zunahme der Lückenlänge ist ein Ergebnis der Zunahme der Geschwindigkeit oder des Geschwindigkeitsverhältnisses zwischen dem Zuführsystem 400 und dem Sortiersystem 22.

Da das Fördersystem in der dargestellten Ausführungsform Förderbänder benutzt, wird der relative Abstand zwischen den Produkten an Übergangspunkten zwischen Bändern unterschiedlicher Geschwindigkeit als Funktion der Position der Mittellinie des Pakets bezüglich den vorderen oder hinteren Bändern geändert. Vor der Längsmittellinie eines einen Übergangspunkt zwischen zwei Bändern erreichenden Pakets wird die Geschwindigkeit des Pakets durch das vordere Band 412b, 420b (Fig. 7) bestimmt. Nachdem die Mittellinie den Übergangspunkt T passiert hat, wird die Geschwindigkeit des Pakets durch das hintere Band 413 bestimmt. Entsprechend ist der Mittellinienabstand zwischen den Paketen nach einer Geschwindigkeitszunahme Dₛ proportional zum Geschwindigkeitsverhältnis der Bänder und dem Mittellinienabstand zwischen den Paketen vor der Geschwindigkeitszunahme D_{I}. Im vorliegenden System wird die gewünschte Lücke bezüglich der Hinterkante des führenden Pakets und der Vorderkante des folgenden Pakets bestimmt.

Entsprechend ist die gewünschte Lücke D_{I} auf dem Sortierband 22 gleich dem Mittellinienabstand Dₛ der Pakete nach der Geschwindigkeitszunahme minus einhalb mal der kombinierten Länge der Pakete. Diese Beziehung wird von jedem Zuführsystem 400 benutzt, um Pakete auf eine Weise zuzuführen, daß die gewünschte Lücke bezüglich einer Geschwindigkeitszunahme zwischen dem Zuführsystem und dem Sortiersystem bestimmt wird. In den dargestellten Ausführungsformen tritt die Geschwindigkeitszunahme zwischen der Nominalgeschwindigkeit der Zuführsteuerförderer 412, 420 und der konstanten Geschwindigkeit ihrer betreffenden Aufnahmeförderer 413 auf. Die Bahngeschwindigkeit des Sortiersystems wird auf die der Aufnahmeförderer 413 abgestimmt. Da die Geschwindigkeit der Zuführsteuerförderer immer vor der Übergabe eines Pakets auf die Nominalgeschwindigkeit eingestellt wird, bestimmt diese Geschwindigkeitszunahme von der Nominalgeschwindigkeit auf die feste Geschwindigkeit des betreffenden Aufnahmeförderers die Abstandszunahme von Mitte zu Mitte der Pakete. Die Geschwindigkeitszunahme wird an diesem Punkt bereitgestellt, da die betroffenen Förderer alle die gleiche Oberflächenreibungseigenschaften aufweisen. Entsprechend ist die Wirkung der Geschwindigkeitszunahme auf den Paketabstand voraussagbarer und konsistent. In der dargestellten Ausführungsform ist die Nominalgeschwindigkeit der Zuführsteuerfördererteile 412b, 420b etwa 2 m/s (400 Fuß pro Minute), und die Geschwindigkeit der Aufnahmeförderer 413 ist etwa 2,7 m/s (540 Fuß pro Minute), um ein Geschwindigkeitsverhältnis von 1:1,35 am Übergangspunkt T zu ergeben (Fig. 7).

Da die gewünschte Lücke auf dem Sortiersystem vorzugsweise eine Funktion der Breite der Pakete sein kann, liefert die vorliegende Erfindung eine geeignete Technik zum Messen der Paketbreite. Ein erster Fotoempfänger 530 wird so positioniert, daß er einen Lichtstrahl 532 unter einem 45°-Winkel α zur Bewegungsrichtung der Pakete auf dem Förderer 412, 420 bestimmt, wie vom Pfeil dargestellt (Fig. 6). Ein Reflektor 534 reflektiert den Strahl zurück zum Empfänger 530, wenn ein Paket den Strahl 532 nicht blockiert. Ein zweiter Fotoempfänger 536, der hinter dem Fotoempfänger 530 angeordnet ist, ist so positioniert, daß er seinen Strahl 538 senkrecht zur Bewegung der Pakete aussendet, bezeichnet mit P. Ein Reflektor 540 reflektiert den Strahl zurück zum Empfänger 536. Wenn das Paket P den Punkt Z erreicht, blockiert es den Strahl 532. Die Steuerung zählt die Zahl der Inkremente des Positionsanzeigers 444, 446, bis die Vorderkante des Pakets P zusätzlich den Strahl 538 des Fotoempfängers 536 unterbricht. Die Steuerung wandelt die Zahl der vom Positionsanzeiger 444, 446 gezählten Inkremente in eine Abstandsmessung um und zieht den Abstand D zwischen den Fotoempfängern 520 und 526 ab. Da der Strahl 532 unter einem Winkel von 45° zur Bewegungsrichtung der Pakete auf dem Förderer 412b, 420b angeordnet ist, ist der berechnete Abstand äquivalent zur Breite der Pakete. Während das Prinzip für einen Winkel α gleich 45° dargestellt ist, ist es klar, daß auch andere Winkel und geeignete Änderungen an den Berechnungen gewählt werden können.

## Patentansprüche

1. Fördersystem mit einem Sortiersystem (20) zur Sortierung von Paketen auf ausgewählte Bahnen (24a-24d), einem Zuführsystem (400) zum Übergeben von Paketen an das Sortiersystem (20) mit einem gewünschten Abstand zwischen den Paketen und einem Steuerungsmittel (44) zum Steuern des Zuführsystems (400), wobei,
das Zuführsystem (400) wenigstens zwei Zuführbahnen (402, 404) mit je einem Zuführsteuerförderer (412, 420) und einem zugeordneten Anfangslückensteuerförderer (408, 416) vor dem Zuführsteuerförderer (412, 420) aufweist,
das Steuerungsmittel (44) Mittel zum Steuern der Geschwindigkeit des Zuführsteuerförderers (412, 420) auf eine Weise, daß der gewünschte Abstand zwischen den Paketen auf dem Sortiersystem (20) eingestellt wird, und zum Steuern der Geschwindigkeit des Anfangslückensteuertörderers (408, 416) auf eine Weise, daß der gesteuerte Abstand zwischen den Paketen auf dem Zuführsteuertörderer (412, 420) eingestellt wird, aufweist, und
das Steuerungsmittel (44) die Geschwindigkeit beider Zuführsteuerförderer (412, 420) auf eine Weise steuert, daß das Zuführsystem (400) veranlaßt wird, Pakete von beiden Zuführsteuerförderern (412, 420) zu vereinen,
dadurch gekennzeichnet,
daß die Steuerung der Geschwindigkeit des Anfangsiückensteuerförderers (408, 416) von der Steuerung der Geschwindigkeit des Zuführsteuerförderers (412, 420) unabhängig ist, und
daß jeder Zuführsteuerförderer (412, 420) und jeder Anfangslückensteuerförderer (408, 416) aus einem ersten Förderteil (412a, 420a, 408a, 416a) und einem zweiten Förderteil (412b, 420b, 408b, 416b) besteht, deren gegenseitige Geschwindigkeit fest geregelt ist.

2. Fördersystem nach Anspruch 1,
dadurch gekennzeichnet,
daß jeder der Zuführförderer (412, 420) Geschwindigkeitssteuermittel aufweist, die auf das Steuerungsmittel (44) reagieren und die Geschwindigkeit des zugeordneten Zuführsteuerförderers (412, 420) zwischen einer niedrigen Geschwindigkeit und wenigstens einer Geschwindigkeit variieren, die größer als die niedrige Geschwindigkeit ist, und wobei das Steuerungsmittel (44) den gesteuerten Abstand zwischen den Paketen auf dem Zuführsteuerförderer (412, 420) als Funktion der Zeit liefert, die das Geschwindigkeitssteuerungsmittel benötigt, um den Zuführsteuerförderer (412, 420) zum Umschalten von einer bestimmten Geschwindigkeit auf die niedrige Geschwindigkeit zu veranlassen.

3. Fördersystem nach Anspruch 1 oder 2,
dadurch gekennzeichnet,
daß das Steuerungsmittel (44) den gesteuerten Abstand zwischen den Mittellinien der Pakete auf den Zuführsteuerförderern (412, 420) einstellt.

4. Fördersystem nach einem der Ansprüche 1 bis 3,
dadurch gekennzeichnet,
daß die Mittel zum Steuern der Geschwindigkeit der Anfangslückensteuerförderer (408, 416) in Abhängigkeit von der Geschwindigkeit des Zuführsteuerförderers (412, 420) und eines Geschwindigkeitsverhältnisses (428, 430) der Geschwindigkeit des Zuführsteuerförderers zu der des Anfangslückensteuerförderers (408, 416) steuern.

5. Fördersystem nach einem der Ansprüche 1 bis 4,
dadurch gekennzeichnet,
daß ein erster Motor (50, 52) mit variabler Geschwindigkeit antriebsmäßig mit dem Zuführsteuerförderer (412a, 412b, 420a, 420b) verbunden ist und ein zweiter Motor (424, 426) mit variabler Geschwindigkeit antriebsmäßig mit dem zugeordneten Anfangslückensteuerförderer (408a, 408b, 416a, 416b) verbunden ist.

6. Fördersystem nach Anspruch 5,
dadurch gekennzeichnet,
daß das Steuerungsmittel (44) erste Wählmittel (70a, 70b) zum Wählen einer Geschwindigkeit des/der ersten Motors/Motoren (50, 52), zweite Wählmittel (70c, 70d) zum Wählen eines Geschwindigkeitsverhältnisses (428, 430) zwischen dem ersten und zweiten (414, 426) Motor je Zuführbahn (402, 404) und auf das erste und zweite Wählmittel (70a-d) reagierende Mittel 76', 78') zum Bestimmen einer Geschwindigkeit des/der zweiten Motors/Motoren (424, 426) aufweist.

7. Fördersystem nach einem der Ansprüche 1 bis 6,
dadurch gekennzeichnet,
daß die Mittel zum Steuern der Geschwindigkeit des Zuführsteuerförderer (412, 420) einen gewünschten Kante/Kante-Abstand zwischen aufeinanderfolgenden Paketen auf dem Sortiersystem (20) einstellen.

8. Fördersystem nach einem der Ansprüche 2 bis 7,
dadurch gekennzeichnet,
daß das Sortiersystem (20) Pakete von den Zuführsystem (400) empfängt und selektiv an Übergabebahnen (24a-d) übergibt,
daß das Zuführsystem (400) erste Fördermittel zum Fördern von Paketen mit einer ersten vorbestimmten Geschwindigkeit aufweist,
daß das Sortiersystem (20) zweite Fördermittel zum Fördern von Paketen mit einer zweiten vorbestimmten Geschwindigkeit aufweist, die von der ersten Geschwindigkeit verschieden ist, und
daß das Steuermittel (44) Mittel zum Steuern des Zuführsteuerförderers aufweist, die gewünschte Lücken zwischen den Paketen bewirken, nachdem die Pakete an das Sortiersystem (20) übergeben worden sind.

9. Fördersystem nach Anspruch 8,
dadurch gekennzeichnet,
daß das Mittel zum Steuern wenigstens auf das Verhältnis zwischen der ersten und der zweiten Geschwindigkeit reagiert.

10. Fördersystem nach Anspruch 9,
dadurch gekennzeichnet,
daß das Mittel zum Steuern weiterhin auf die Länge der Pakete in Bewegungsrichtung der Pakete reagiert.

11. Fördersystem nach Anspruch 10,
dadurch gekennzeichnet,
daß das Mittel zum Steuern weiterhin auf die Breite der Pakete in Bewegungsrichtung der Pakete reagiert.

12. Fördersystem nach Anspruch 7 und einem der Ansprüche 8 bis 11,
dadurch gekennzeichnet,
daß das Steuermittel (44) den Zuführsteuerförderer (412, 420) zum Übergeben von Paketen an das Sortiersystem (20) mit einer Geschwindigkeit steuert, die verschieden von der Bahngeschwindigkeit des Sortiersystems (20) ist, und Mittel zum Bestimmen des Kante/Kante-Abstands zwischen Paketen auf dem Zuführsteuertörderer (412, 420) als Funktion des Verhältnisses der Geschwindigkeit aufweist.

13. Fördersystem nach den Ansprüchen 2 bis 12,
dadurch gekennzeichnet,
daß die niedrige Geschwindigkeit ein Haltezustand ist.

## Claims

1. Conveyor system with a sorting system (20) for the sorting of packets on selected tracks (24a - 24d), a feeder system (400) to transfer packets to the sorting system (20) with a desired distance between the packets, and means of control (44) to control the feeder system (400), wherein the feeder system (400) has at least two feed tracks (402, 404) each with a feed control conveyor (412, 420) and an associated initial gap control conveyor (408, 416) upstream from the feed control conveyor (412, 420), the means of control (44) which regulate the speed of the feed control conveyors (412, 420) are adjusted so as to maintain the desired distance between the packets on the sorting system (20), and means of control which regulate the speed of the initial gap control conveyors (408, 416) are adjusted so as to maintain the controlled distance between the packets on the feed control conveyor (412, 420), and the means of control (44) regulate the speed of both feed control conveyors (412, 420) so that the feeder system (400) is caused to bring together packets from the two feed control conveyors (412, 420),
characterized in that
the control of the speed of the initial gap control conveyors (408, 416) is independent of the control of the speed of the feed control conveyors (412, 420), and in that each feed control conveyor (412, 420) and each initial gap control conveyor (408, 416) consists of a first conveyor portion (412a, 420a, 408a, 416a) and a second conveyor portion (412b, 420b, 408b, 416b), whose respective speeds are closely controlled.

2. Conveyor system according to Claim 1,
characterized in that
each of the feed control conveyors (412, 420) possesses means to control its speed that interact with the means of control (44) and vary the speed of the associated feed control conveyor (412, 420) between a lower speed and at least a speed higher than the lower speed, whereby the means of control (44) maintain the controlled distance between the packets on the feed control conveyors (412, 420) as a function of the time required by the speed control means to switch the feed control conveyors (412, 420) over from a given speed to the lower speed.

3. Conveyor system according to Claims 1 or 2,
characterized in that
the means of control (44) regulate the controlled distance between the centre-lines of the packets on the feed control conveyors (412, 420).

4. Conveyor system according to any of Claims 1 to 3,
characterized in that
the means of control regulate the speed of the initial gap control conveyors (408, 416) as a function of the speed ratio between the respective speeds of the feed control conveyors (412, 420) and the initial gap control conveyors (408, 416).

5. Conveyor system according to any of Claims 1 to 4,
characterized in that
a first set of variable-speed motors (50, 52) is linked to drive the feed control conveyors (412a, 412b, 420a, 420b) and a second set of variable-speed motors (424, 426) is linked to drive the associated initial gap control conveyors (408a, 408b, 416a, 416b).

6. Conveyor system according to Claim 5,
characterized in that
the means of control (44) comprise a first means of selection (70a, 70b) allowing selection of the speed of the first motor/motors (50, 52), a second means of selection (70c, 70d) allowing selection of a speed ratio (428, 430) between the first and second (414, 426) motors of each feed track (402, 404), and means (76', 78') that interact with the first and second means of selection (70a-d) to determine the speed of the second motor/motors (424, 426).

7. Conveyor system according to any of Claims 1 to 6,
characterized in that
the means of control for the speed of the feed control conveyors (412, 420) regulate a desired edge-to-edge separation between successive packets on the sorting system (20).

8. Conveyor system according to any of Claims 2 to 7,
characterized in that
the sorting system (20) takes packages from the feeder system (400) and transfers them selectively to transfer tracks (24a-d),
and in that the feeder system (400) comprises a first means of conveying for the transport of packages at a first predetermined speed,
and in that the sorting system (20) comprises means of conveying for the transport of packets at a second predetermined speed different from the first speed, and in that the means of control (44) comprise means for the regulation of the feed control conveyors to establish the desired gaps between the packets depending on how the packets are to be passed on to the sorting system (20).

9. Conveyor system according to Claim 8,
characterized in that
the means of control react at least to the ratio between the first and second speeds.

10. Conveyor system according to Claim 9,
characterized in that
the means of control also react to the length of the packets in the travel direction thereof.

11. Conveyor system according to Claim 10,
characterized in that
the means of control also react to the width of the packets in the travel direction thereof.

12. Conveyor system according to Claim 7 and any of Claims 8 to 11,
characterized in that
the means of control (44) regulate the feed control conveyors (412, 420) that transfer the packets to the sorting system (20) to a speed different from the track speed of the sorting system (20), and comprise means of determining the edge-to-edge separation between packets on the feed control conveyors (412, 420) as a function of the speed ratio.

13. Conveyor system according to Claims 2 to 12,
characterized in that
the lower speed is a stationary condition.

## Revendications

1. Système de transport comportant un système de triage (20) pour trier des paquets sur des voies choisies (24a-24d), un système d'amenée (400) pour transférer des paquets au système de triage (20) avec un écartement souhaité entre les paquets, et un moyen de commande (44) pour commander le système d'amenée (400), le système d'amenée (400) présentant au moins deux voies d'amenée (402,404) avec, à chaque fois, un transporteur de commande d'amenée (412,420) et un transporteur de commande de vides initiaux (408,416) associé devant le transporteur de commande d'amenée (412,420), le moyen de commande (44) présentant des moyens pour commander la vitesse du transporteur de commande d'amenée (412,420) de sorte que l'écartement souhaité entre les paquets sur le système de triage (20) soit réglé, et pour commander la vitesse du transporteur de commande de vides initiaux (408,416) de sorte que l'écartement commandé entre les paquets sur le transporteur de commande d'amenée (412,420) soit réglé, et le moyen de commande (44) commandant la vitesse des deux transporteurs de commande d'amenée (412,420) de sorte que le système d'amenée (400) peut réunir des paquets des deux transporteurs de commande d'amenée (412,420),
caractérisé en ce que la commande de la vitesse du transporteur de commande de vides initiaux (408,416) est indépendante de la commande de la vitesse du transporteur de commande d'amenée (412,420), et en ce que chaque transporteur de commande d'amenée (412,420) et chaque transporteur de commande de vides initiaux (408,416) est constitué d'une première partie de transport (412a,420a, 408a,416a) et d'une seconde partie de transport (412b,420b, 408b,416b), dont les vitesses mutuelles sont réglées de façon fixe.

2. Système de transport selon la revendication 1,
caractérisé en ce que chacun des transporteurs d'amenée (412,420) présente des moyens de commande de vitesse, qui réagissent au moyen de commande (44) et font varier la vitesse du transporteur de commande d'amenée (412,420) associé entre une vitesse faible et au moins une vitesse qui est plus grande que la vitesse faible, et le moyen de commande (44) délivre l'écartement commandé entre les paquets sur le transporteur de commande d'amenée (412,420) en fonction du temps, que nécessite le moyen de commande de vitesse pour pouvoir faire passer le transporteur de commande d'amenée (412,420) d'une vitesse déterminée à la vitesse faible.

3. Système de transport selon la revendication 1 ou 2,
caractérisé en ce que le moyen de commande (44) règle l'écartement commandé entre les axes des paquets sur les transporteurs de commande d'amenée (412,420).

4. Système de transport selon une des revendications 1 à 3,
caractérisé en ce que les moyens pour commander la vitesse des transporteurs de commande de vides initiaux (408,416) agissent de façon dépendant de la vitesse du transporteur de commande d'amenée (412,420) et d'un rapport de vitesses (428,430) de la vitesse du transporteur de commande d'amenée par rapport à celle du transporteur de commande de vides initiaux (408,416).

5. Système de transport selon une des revendications 1 à 4,
caractérisé en ce qu'un premier moteur (50,52), à vitesse variable, est relié en entraînement avec le transporteur de commande d'amenée (412a,412b,420a,420b) et un second moteur (424,426), à vitesse variable, est relié en entraînement avec le transporteur de commande de vides initiaux (408a, 408b,416a,416b) associé.

6. Système de transport selon la revendication 5,
caractérisé en ce que le moyen de commande (44) présente des premiers moyens de choix (70a,70b) pour choisir une vitesse du ou des premiers moteurs (50,52), des seconds moyens de choix (70c,70d) pour choisir un rapport de vitesses (428,430) entre les premier et second moteurs (424,426) de chaque voie d'amenée (402,404), et des moyens (76',78') réagissant aux premiers et seconds moyens de choix (70a-d) pour déterminer une vitesse du ou des seconds moteurs (424,426).

7. Système de transport selon une des revendications 1 à 6,
caractérisé en ce que les moyens pour commander la vitesse du transporteur de commande d'amenée (412,420) règlent un écartement souhaité bord à bord entre des paquets successifs sur le système de triage (20).

8. Système de transport selon une des revendications 2 à 7,
caractérisé en ce que le système de triage (20) reçoit des paquets du système d'amenée (400) et les transmet de façon sélective à des voies de transfert (24a-d), en ce que le système d'amenée (400) présente des premiers moyens de transport pour transporter des paquets avec une première vitesse prédéterminée, en ce que le système de triage (20) présente des seconds moyens de transport pour transporter des paquets avec une seconde vitesse prédéterminée qui est différente de la première vitesse, et en ce que le moyen de commande (44) présente des moyens pour commander le transporteur de commande d'amenée, qui déterminent des vides souhaités entre les paquets après que les paquets ont été transférés au système de triage (20).

9. Système de transport selon la revendication 8,
caractérisé en ce que le moyen de commande réagit au moins au rapport entre les première et seconde vitesses.

10. Système de transport selon la revendication 9,
caractérisé en ce que le moyen de commande réagit de plus à la longueur des paquets dans le sens de déplacement des paquets.

11. Système de transport selon la revendication 10,
caractérisé en ce que le moyen de commande réagit de plus à la largeur des paquets dans le sens de déplacement des paquets.

12. Système de transport selon la revendication 7 et une des revendications 8 à 11,
caractérisé en ce que le moyen de commande (44) commande le transporteur de commande d'amenée (412,420) pour transférer des paquets au système de triage (20) avec une vitesse qui est différente de la vitesse de voie du système de triage (20), et présente des moyens pour déterminer l'écartement bord à bord entre des paquets sur le transporteur de commande d'amenée (412,420) en fonction du rapport des vitesses.

13. Système de transport selon les revendications 2 à 12,
caractérisé en ce que la vitesse faible est un état d'arrêt.
